# EUROPEAN PATENT SPECIFICATION

(11) **EP 3 433 915 B1**
(45) Date of publication and mention of the grant of the patent: **05.08.2020**
(21) Application number: 16716045.6
(22) Date of filing: 23.03.2016
(51) Int. Cl.: H02J 7/02, F21S 8/00, H02J 7/04

(54) **CHARGER COMPRISING NIGHT LIGHT**
LADEGERÄT MIT NACHTLICHT
CHARGEUR AVEC VEILLEUSE

(43) Date of publication of application: 30.01.2019
(73) Proprietor: Brightcharger Europe Oy Ltd., 40930 Kinkomaa (FI)
(72) Inventor: TIAINEN, Harri, 40930 Kinkomaa (FI)
(74) Representative: Papula Oy
(86) International application number: PCT/FI2016/050188
(87) International publication number: WO 2017/162905

(56) References cited:
- US-A1- 2012 119 695
- US-A1- 2014 185 325

## Description

### BACKGROUND

In recent decades, the number of different kinds of chargeable devices that are powered by electric current has grown enormously, and a single household may have for example 2 - 10 chargeable battery-operated devices. Such devices include for instance mobile phones, portable computers, electric toothbrushes and tablets. The devices may be charged on a continuing basis when stowed away, or when the battery needs to be charged. For example, in the case of mobile phones and tablets, charging may be repeated for example once a day or every other day. From the user's perspective, it requires effort to repeatedly monitor the filling or the charge percentage of the battery of a chargeable device, due to which the device may be charged for a considerably longer time than required to charge the battery full.

In general, devices to be charged are able to switch from using the charging current to the use of standby current, when the battery of a chargeable device becomes full. Although the standby current is considerably lower than charging current, on an annual level it still leads to significant electricity consumption. The charger also consumes current when left connected to the mains current, even if the charger was not connected to a chargeable device. This electricity consumption is completely useless and wasted energy. Scaling the problem up to a global level, electricity may be wasted by chargers to an extent that equals the production of several nuclear power plants. Furthermore, the standby current supplied by chargers to a chargeable device destroys or weakens the capacity of the battery of the chargeable device, speeding up the decrease of capacity of the battery. The batteries may have a certain life span of the available overall charging time.

2012/119695 A1 discloses a touch-switchable USB charging receptacle comprising a light emitting unit including two LEDs with different colours, each activated according to the different states of the power supply within the charging receptacle (e.g. supplying or not supplying power). When the user actuates on a touch switch button, the power supply turns on or off. The emitted light also helps the user to recognize the position of the receptacle in a dark environment or at night. US 2014/0185325 A1 discloses a night-light including three LEDs to be activated when a manual switch is in a conductive state

### SUMMARY

This summary is provided to introduce a selection of concepts in a simplified form that are further described below in the detailed description. This summary is not intended to identify key features or essential features of the disclosure, nor is it intended to be used to limit its scope.

The invention is defined by the appended claims. In a first aspect, the invention relates to the charger device of independent apparatus claim 1. In a second aspect, the invention relates to the method of independent method claim 9.

Many of the attendant features will be more readily appreciated as they become better understood by reference to the following detailed description considered in connection with the accompanying drawings.

### BRIEF DESCRIPTION OF THE DRAWINGS

The present description will be better understood from the following detailed description read in light of the accompanying drawings, wherein:
FIG. 1 illustrates a schematic block diagram of a charger configured to charge a battery on the basis of a charging operation of the battery, wherein the charger comprises a night light according to the disclosure;
FIG. 2 illustrates current of a charger as a function of time when a night light is used according to the disclosure;
FIG. 3 illustrates current of a charger as a function of time when a night light is used and another charging operation is performed according to the disclosure;
FIG. 4 illustrates current of a charger as a function of time when a night light is used and the charger is unplugged before the charging has finished according to the disclosure;
FIG. 5 illustrates current of a charger as a function of time when a night light is used, the device is unplugged before the charging has finished, and another charging operation is performed according to the disclosure; and
FIG. 6 illustrates current of a charger as a function of time when a night light is automatically on for a period of time after charging has ended according to the disclosure;

Like numerical references are used to designate like parts in the accompanying drawings.

### DETAILED DESCRIPTION

The detailed description provided below in connection with the appended drawings is intended as a description of the present disclosure and is not intended to represent the only forms in which the present disclosure may be constructed or utilized. However, the same or equivalent functions and sequences may be accomplished by different forms of the disclosure

Although the teachings of the present disclosure may be described and illustrated herein as being implemented in a smartphone or a mobile phone and a respective charger, these are only examples of an electrical device having a battery to be charged by a charger, and not a limitation. As those skilled in the art will appreciate, the present teachings are suitable for application in a variety of different types of battery operated devices that require charging, for example in tablets, phablets, computers, cameras, game consoles, laptop computers, domestic electrical devices, electrical toothbrushes, vacuum cleaners with battery, etc.

A charger of the present disclosure detects charging power for at least two values and configures the charging based on the power. When a relation between the two values of the charging power has been under a certain threshold for a given time, the charging may be switched off. The charging power may be based on a charging current and/or a charging voltage. The charger may not restart without the activity of the user. Energy may be saved and the lifetime of the battery may be increased because unnecessary charging can be avoided. The charger comprises illumination having a night light and a charging light. The illumination is configured based on the charging. This may indicate to the user when charging is being conducted and operate as a night light for twilit or dark circumstances. The charger also has a user activation switch for activating the charging and for controlling the illumination.

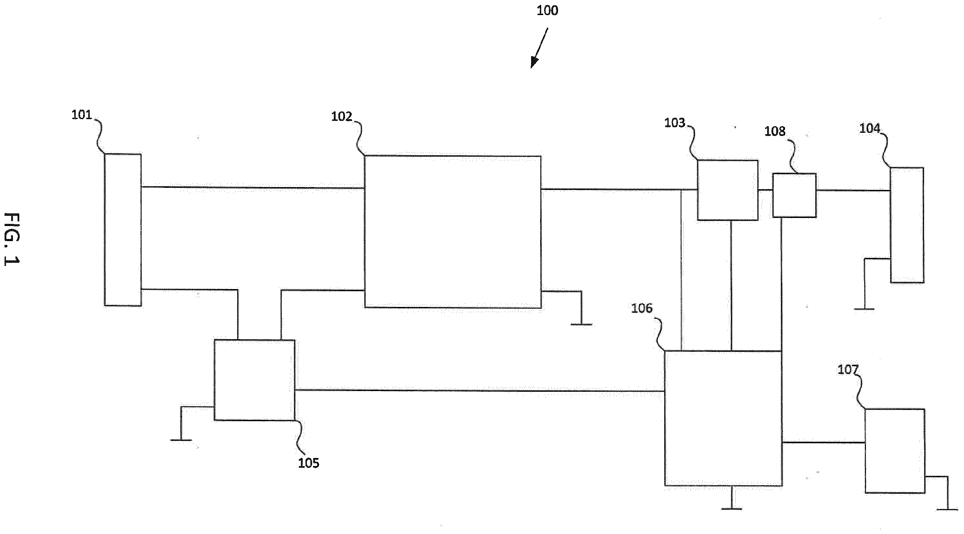

FIG. 1 illustrates a schematic block diagram of a charger 100 configured to charge a battery (not shown in FIG. 1) on the basis of a charging operation. The charger 100 comprises an illumination device 107 according to an embodiment.

The charger 100 comprises a reception 101. It may be an AC input of 230V. The reception 101 may be configured to receive electric current and accordingly electrical power energy from electric mains. The reception 101 is connected to a converter 102 and to a user switch 105. The charger comprises the converter 102. It may be an isolated component alternative current, AC, to direct current, DC, converter. The converter 102 may convert from, for example 110V or 230V, AC to, for example 5V, DC. The converter 102 is configured to convert AC of the grid to DC for the battery. The converter 102 may comprise two AC inputs, a +5V output and a ground. The converter 102 is connected to the reception 101, to the user switch 105 and to a detector 103. The charger comprises the detector 103. The detector 103 is configured to detect charging of the battery. The detector 103 detects values for the charging. The detector 103 may be a current measurement resistor device, measuring resistance of the charging current. The detector 103 is connected to the converter 102, to another user switch 108, to a processor 106. The charger comprises the switch 108. The switch 108 is configured to switch the illumination device 107, such as the night light feature, on or off. The switch 108 may controlled by a tip of a pen, and it's a long term type of a switch. The switch 108 is connected to the detector 103, to the processor 106, and to a supply 104. The charger 100 comprises the supply 104 which is configured to supply the charging current to the battery. It may be a USB connector.

Referring to FIG. 1, the charger comprises the user switch 105. The user switch 105 is configured to trigger the start of the charging. Consequently, the charging process may not start before the user switch 105 has been activated. Furthermore, the user switch 105 is configured to trigger an illumination device 107 to be switched on. Consequently, the illumination device 107 may not be on before the user switch is activated. The user switch 105 may also switch the illumination device 107 off when receiving deactivation. The user switch 105 receives activation and de-activation made by the user. The user switch 105 may be a push button with auto return. The user switch 105 may be configured so that a displacement of a cover of the charger 100 may act as the switch 105. For example, the user may push or touch a cover of the charger 100 for switching. The user switch 105 may be configured to the pins which enter the socket, so that user may switch the charger 100 may pressing the charger 100 against the socket. For another example, when the charger 100 is connected to the socket, the user may activate the switch 105 by pressing the charger 100 against to wall. The user switch 105 is connected to the reception 101, to the converter 102 and to the processor 106. The charger 100 comprises the processor 106. The processor 106 is configured to control the charging based on the detected value of the charging and/or the user switch 105. Furthermore, the processor 106 is configured to control the illumination device 107 based on the charging and/or the user switch 105. The processor 106 receives input signals from the user switch 105 and from the detector 103. The processor 106 outputs signals to the converter 102 for controlling the charging current. The processor 106 outputs signals to the illumination device 107. The processor 106 also controls the user switch 105. The processor 106 may switch the user switch 105 on and off. The processor 106 is connected to the converter 102, to the detector 103, to the other switch 108, to the user switch 105 and to the illumination device 107. The charger 100 comprises the illumination device 107. The illumination device 107 is configured to output night or twilit illumination, such as relatively low powered white light. Furthermore, the illumination device 107 is configured to output another kind of light such as green light for indicating the ongoing charging process. The illumination device 107 may comprise at least one LED and possibly a LED controller. The LED may be RGB LED or another kind of LED. Furthermore, the illumination device 107 may be other than LED.

The device 100 may operate only as a night light, even without the charging being operable, and have the light on/off switching. For example, when the electrical device to be charged is disconnected.

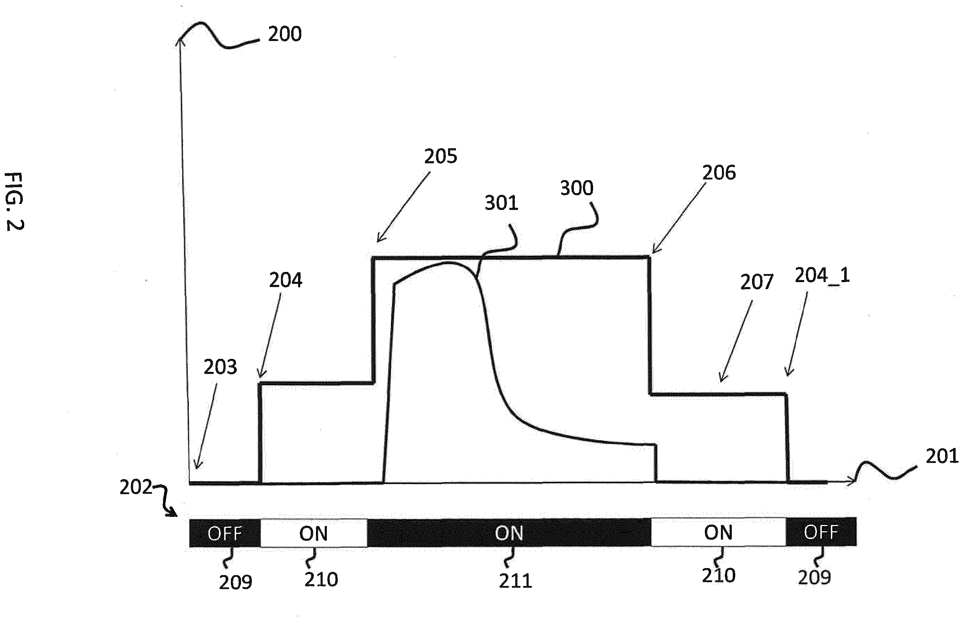

In FIGS. 2 to 6 overall current consumption and charging current are only schematically illustrated. Although the overall current consumption is schematically illustrated by a constant value, it may depend on the charging current, and consequently follow the charging current when the charging current is active. Furthermore the overall current consumption is illustrated for demonstration purposes only having a considerable difference to the charging current. The current consumption may make only a small addition to the charging current consumption. For example, the overall current consumption comprising current consumption of the illumination and charging, wherein the illumination current consumption is very small in comparison to the charging current consumption.

FIG. 2 illustrates current 200 of a charger 100 as a function of time 201 when a night light is used according to an example .

The current 200 is illustrated by the y-axis and the time 201 by the x-axis in the diagram of FIG. 2. Overall current consumption is illustrated by curve 300. Curve 301 illustrates the charging current of the battery of the electrical device. At point 203, the charger 100 is plugged to the socket. For example, the user plugs the charger 100 to a wall socket of the mains electricity. The charging does not start. The illumination is not on as illustrated by reference 209. Thus illumination device 107 is switched off. The overall current consumption 300 is zero, thus charging current 301 being zero. At point 204, the user switch 105 is activated. For example, the user triggers the switch 105, such as pushes a button. This switches a night light 210 on by the illumination device 107. For example, the charger 100 emits white light for twilit or dark room. The overall current consumption 300 increases. At point 205, the charger 100 is connected to the electrical device. The electrical device is connected to the charger 100 via the supply 104. For example, the user connects a USB connector to a mobile phone. The charging process starts, and the charger 100 starts to charge the battery of the electrical device. The user switch 105 is thus activated at the point 205. After this, the charging current 301 first increases. The charging current 301 decreases in response to the charging process as illustrated by the curve 301. For example, the detector 103 monitors the charging current based on resistance, and the processor 106 sets the current level accordingly and controls the converter 102 for determining the charging current based on the detection. Furthermore, the processor 106 controls the illumination device 107 to turn on a light indicating that the charging process is ongoing as shown by reference 211, for example a green light is switched on. The overall current consumption is illustrated by curve 300 comprising the charging current 301 consumption and illumination current consumption. Although the overall current consumption 300 is schematically illustrated by a constant value in FIG. 2, it depends on the charging current 301, and consequently the overall consumption 300 decreases along with the charging current 301. The processor 106 may switch the charging process off, when a relation between the first and the second value of the charging power exceeds a threshold for a period of time. In case when the chargeable device is turned off the current value has been under a predetermined value for a certain period of time, the processor 106 may switch the changing process off. The charging is now ready. This is illustrated by point 206. The charging current 301 is now switched off.

The detector 103 may be configured to detect a charging power of the battery of an electrical device and to determine a first and a second value of the charging power. The controller 106 may be configured to control the switch 105 for disconnecting the charging when a relation between the first and the second value of the charging power exceeds a threshold for a period of time. The current value of the charging current may be compared to a charging current value, which is determined earlier in the charging process. For example current charging current value is compared to a previous value, which is determined relatively close to the current point of time up to several hours before the current point of time, depending on the charging process and other parameters. Furthermore, a relation may be calculated from these values for a certain period of time. The certain period of time may prevent any false detection, in case a very rapid power changes in the charging process.

Furthermore at the point 206, the processor 106 controls the illumination device 107 to change illumination from the charging illumination 211 to the night light illumination 210. For example, the illumination changes from green to white light. Consequently, the overall current consumption 300 decreases and is only based on the night light illumination 210. At point 207, the charger 100 is unplugged from the electrical device. For example, the user unplugs the USB cable. This does not, however, affect the night light illumination 210, which remains on. At point 204_1, the user deactivates the charger 100 by the user switch 105. For example, the user presses the button. The processor 106 switches off the night light 210 of the illumination device 107. The overall current consumption 300 drops to zero.

The charging does not start before the user activates the charger 100. Furthermore, the night light is not switched on prior to the activation. Consequently, the charger saves energy. The energy consumption is zero or substantially zero when the charger 100 is not activated, even when the charger 100 is plugged to the socket. The charging process may be performed in response to the battery's capability to be charged. The charging process can be switched off automatically when the charging cycle has finished and the battery is full. There is no waste of energy, and battery life time is also saved as short repeating pumping charging cycles are avoided, even when the battery is full. Furthermore, the illumination automatically follows the charging cycle; when the charging is on, the illumination is indicating the charging process. When the charging process has finished, the illumination automatically switches to the night light mode. For energy saving reasons or for usability, the night light may be switched off, even when the charger 100 is plugged to the socket.

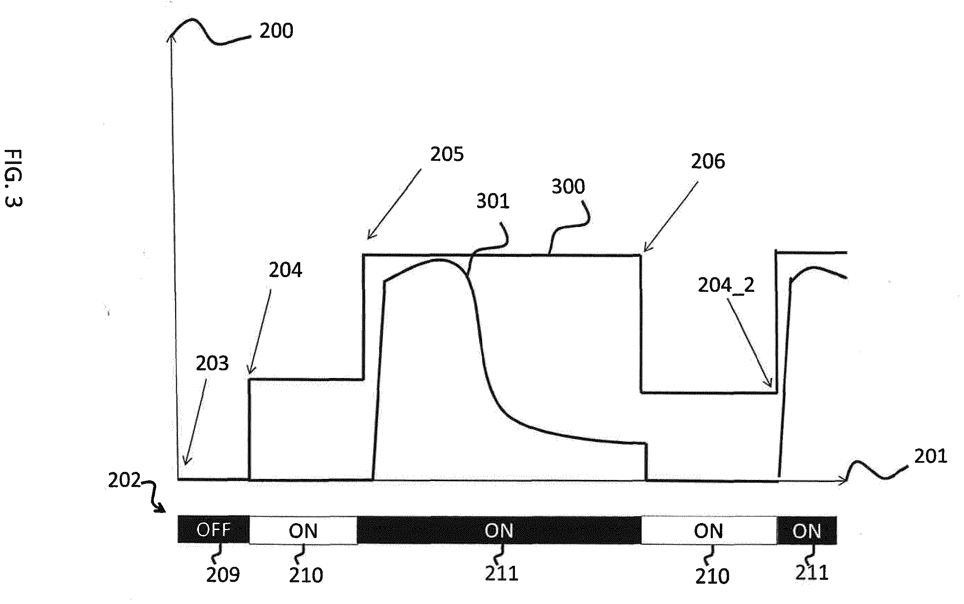

FIG. 3 illustrates current 200 of a charger 100 as a function of time 201 when a night light is used and another charging operation is performed after a first charging operation has been finished according to an example. The behaviour of FIG. 3 is similar to the behaviour of FIG. 2 for points 203,204,205,206. The charging is ready at point 206. At point 204_2, the user activates the charger 100. The user activates the user switch 105. The charging process re-starts for another charging process, and the illumination is automatically switched to the charging illumination 211.

The user may re-activate the charging process, for example to ensure that the battery is full, or in case there has been battery consumption after finishing the first charging process. The illumination automatically follows the charging process.

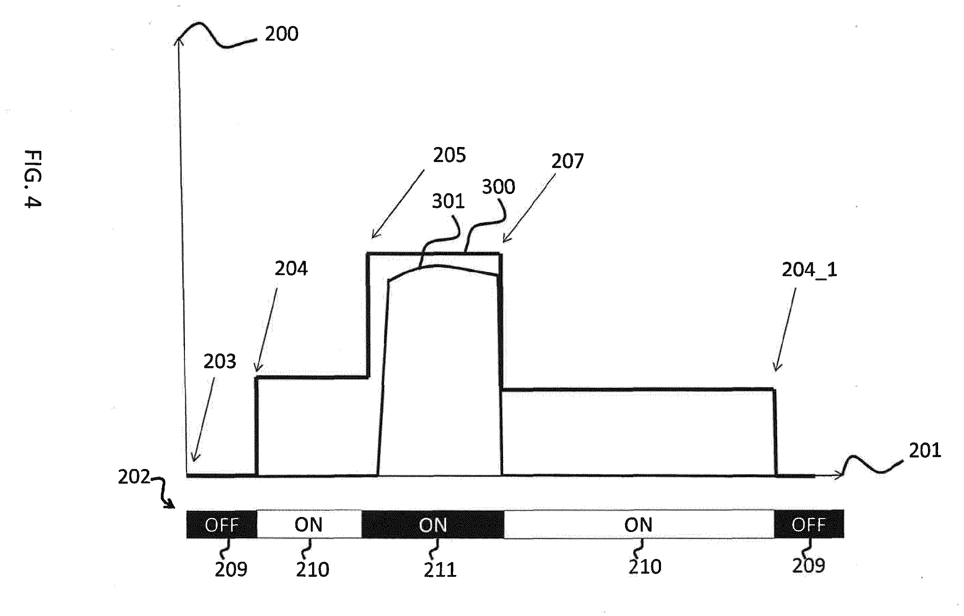

FIG. 4 illustrates current 200 of a charger 100 as a function of time 201 when a night light is used and the charger is disconnected before the charging has finished according to an example.

The behaviour of FIG. 4 is similar to the behaviour of FIG. 2 for points 203,204,205. At point 207, the charger 100 is disconnected from the electrical device. For example, the USB cable with the USB connection is disconnected. The charging process is naturally terminated, as illustrated by curve 301 in FIG. 4. The processor 106 switches the illumination device 107 from the charging illumination 211 to the night light illumination 210. The night light illumination 210 remains on until the user de-activates it at point 204_1.

The illumination may automatically follow the charging process. The user is able to activate and de-activate the illumination. The illumination may act as a night light even without the charging process.

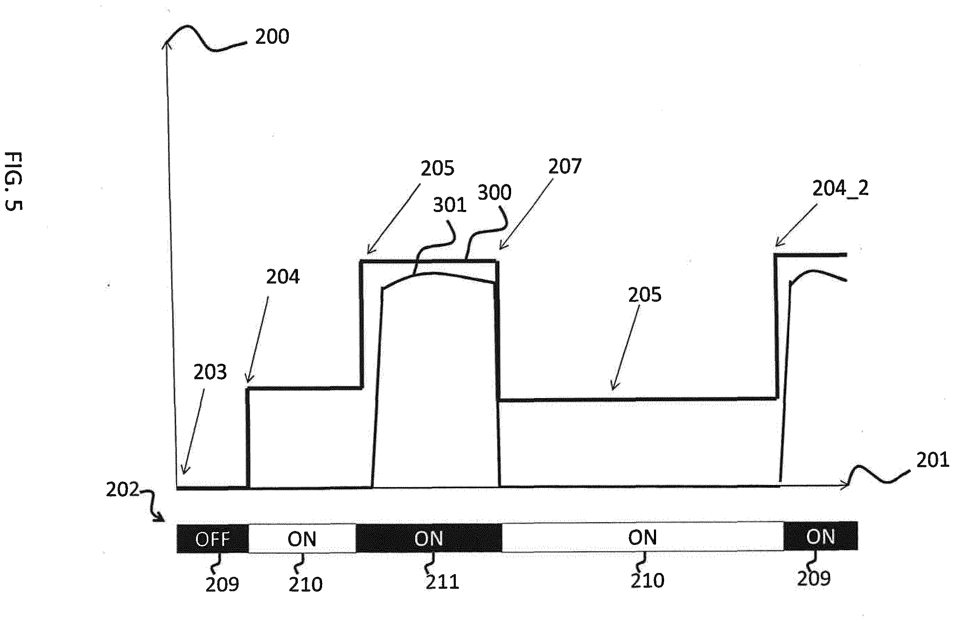

FIG. 5 illustrates current 200 of a charger 100 as a function of time 201 when a night light is used. The charger 100 is unplugged before the charging process has finished and another charging operation is performed according to an example. Thus the charger 100 is disconnected from the electrical device to be charged. The charger 100 may be maintained at the socket, for example as a default choice, and only the USB cable connecting the charger 100 to the chargeable device 100 is disconnected.

The behaviour of FIG. 5 is similar to FIG. 4 for points 203, 204, 205, 207. At point 205, the charger 100 is reconnected to the electrical device after it has been disconnected at point 207. The charging process does not start. The night light illumination 210 remains on. At point 204_2, the user activates the user switch 105. The charging re-starts and the illumination changes from the night light 210 to charging illumination 211.

Despite the charger 100 being connected to the electrical device at point 207, the charging starts after the user has activated the charger. The charging process may also re-start and is configured according to the capacity of the battery. Consequently, re-start needs user activation. The charger 100 may act as a night light having on/off switch, when charging process is not activated.

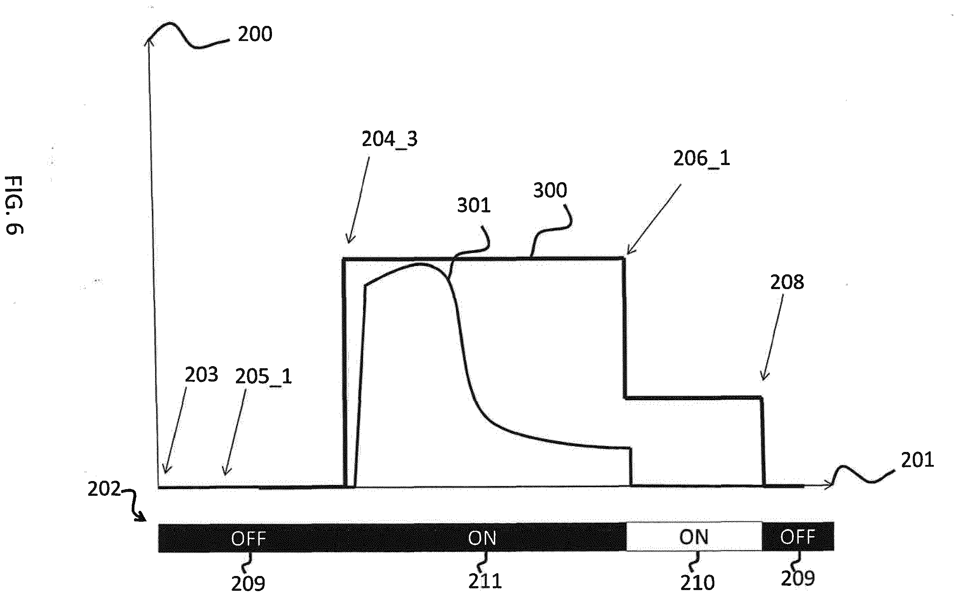

FIG. 6 illustrates current 200 of a charger 100 as a function of time 201 when a night light is used so as to be automatically switched on after the charging has finished according to an example.

At point 203, the charger 100 is plugged to the socket. The charging does not start. The illumination is not on as illustrated by reference 209; thus, the illumination device 107 is switched off. The overall current consumption 200 is zero. At point 205_1, the charger 100 is connected to the battery. The connector 104 is connected to the electrical device. However, the charging does not start. The illumination is not on as illustrated by reference 209. The overall current consumption 200 is zero. At point 204_3, the user activates the charger 100. The user activates the user switch 105. The charging process starts as illustrated by the charging current 301. The illumination switches directly to charging illumination 211. At point 206_1, the charging process is ready. The night light 210 may be automatically switched on by the processor 106 after the charging is ready for a predetermined period of time. For example, it may be on for one hour. After the predetermined period has lapsed, the processor 106 switches the night light 210 off at point 208. Consequently, the electric consumption is zero.

The charger 100 may optionally comprise a super capacitor storing an amount of electrical energy. The super capacitor may be configured to feed power to the illumination device 107 for example to the night light, when the mains supply is disturbed, for example during a power outage. Consequently, the charger 100 may be illuminated for a short period of time, when the power outage takes place. This may provide user with convenience and safety.

The functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

Alternatively, or in addition, the functionalities described herein may be operated by software in machine readable form on a tangible storage medium e.g. in the form of a computer program comprising computer program code means adapted to perform all the functions and the steps of any of the methods described herein when the program is run on a computer and where the computer program may be stored in a computer readable medium.

Examples of tangible storage media include computer storage devices comprising computer-readable media such as disks, thumb drives, memory etc. and do not include propagated signals. Propagated signals may be present in a tangible storage medium, but propagated signals per se are not examples of tangible storage media. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Any range or device value given herein may be extended or altered without losing the effect sought.

Although the teaching of the present disclosure has been described in language specific to structural features and/or acts, it is to be understood that the invention is defined by the scope of the appended claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The steps of the methods described herein may be carried out in any suitable order, or simultaneously where appropriate. Additionally, individual blocks may be deleted from any of the methods , those modified method being considered part of the present inventions only if according to the appended claims.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use examples. Although various examples have been described above with a certain degree of particularity, or with reference to one or more individual examples, those skilled in the art could make numerous alterations thereon. Those modified examples are considered part of the invention if they do not contradict the appended claims.

## Claims

1. A charger device (100), comprising:
a detector (103) configured to detect a charging power of a battery of an electrical device comprising a first and a second value of the charging power, wherein the first value comprises a current value of the charging power and the second value comprises a previous value of the charging power;
a switch (105) configured to connect and disconnect the charging;
a controller (106) configured to control the switch for disconnecting the charging when a relation between the first and the second value of the charging power exceeds a threshold for a period of time;
an illumination device (107) comprising a night light illumination (210) and a charging illumination (211), wherein the night light illumination is configured to illuminate surroundings of the charger device in dark or twilit circumstances, wherein the controller is further configured to control the night light illumination for illuminating the charger device on the basis of the relation, wherein the controller is further configured to control the charging illumination on the basis of the relation; and
a user switch (105,108) configured to control the illumination device for switching the night light and charging illumination on and off based on activation by a user of the charger device so that the night light illumination and the charging illumination may not be on before the user switch is activated.

2. The charger device of any preceding claim, wherein the user switch is configured to also switch the charging on.

3. The charger device of any preceding claim, wherein the charger device is configured to start charging when the user switch is activated, the charger device is plugged in a socket and connected to the battery of the electrical device.

4. The charger device of any preceding claim, wherein the controller is configured to connect the switch after receiving the activation of the user switch.

5. The charger device of any preceding claim, wherein the charging power is based on a charging current; or wherein the charging power is based on a charging voltage.

6. The charger device of claim 1, wherein the controller is configured to switch the night light illumination on (210) when the charging is disconnected; or
wherein the controller is configured to switch the night light illumination off when the charging is connected.

7. The device of any preceding claim, wherein the illumination device further includes a charging light, wherein the controller is configured to switch the charging light (211) on when the charging is on.

8. The charger device of claim 7, wherein the controller is configured to switch the charging light off when the charging is off.

9. A method, comprising:
detecting, by a detector (103), a charging power of a battery of an electrical device comprising a first and a second value of the charging power, wherein the first value comprises a current value of the charging power and the second value comprises a previous value of the charging power;
connecting and disconnecting, by a switch (105), the charging;
controlling, by a controller (106), the switch for disconnecting the charging when a relation between the first and the second value of the charging power exceeds a threshold for a period of time;
illuminating, by an illumination device (107) comprising a night light illumination (210) and a charging illumination (211), surroundings of a charger device in dark or twilit circumstances, wherein the controller further controls the night light for illuminating the charger evice on the basis of the relation, wherein the controller is further configured to control the charging illumination on the basis of the relation; and
switching, by a user switch (105,108), the night light illumination and the charging illumination on and off based on an activation by a user of the charger device so that the night light illumination and the charging illumination may not be on before the user switch is activated.

## Patentansprüche

1. Ladeeinrichtung (100), umfassend:
einen Detektor (103), der eingerichtet ist, eine Ladeleistung einer Batterie einer elektrischen Einrichtung, enthaltend einen ersten und einen zweiten Wert der Ladeleistung, zu erfassen, wobei der erste Wert einen aktuellen Wert der Ladeleistung enthält und der zweite Wert einen vorherigen Wert der Ladeleistung enthält;
einen Schalter (105), der eingerichtet ist, das Laden zu verbinden und zu trennen;
eine Steuerungseinheit (106), die eingerichtet ist, den Schalter zum Trennen des Ladens zu steuern, wenn eine Beziehung zwischen dem ersten und dem zweiten Wert der Ladeleistung einen Schwellenwert für einen bestimmten Zeitraum überschreitet;
eine Beleuchtungseinrichtung (107), umfassend eine Nachtlichtbeleuchtung (210) und eine Ladebeleuchtung (211), wobei die Nachtlichtbeleuchtung eingerichtet ist, die Umgebung der Ladeeinrichtung bei dunklen oder halbdunklen Verhältnissen zu beleuchten, wobei die Steuerungseinheit ferner eingerichtet ist, die Nachtlichtbeleuchtung zum Beleuchten der Ladeeinrichtung auf Grundlage der Beziehung zu steuern, wobei die Steuerungseinheit ferner eingerichtet ist, die Ladebeleuchtung auf Grundlage der Beziehung zu steuern; und
einen Benutzerschalter (105, 108), der eingerichtet ist, die Beleuchtungseinrichtung zum Ein- und Ausschalten des Nachtlichts und der Ladebeleuchtung zu steuern auf Grundlage einer Aktivierung durch einen Benutzer der Ladeeinrichtung, so dass die Nachtlichtbeleuchtung und die Ladebeleuchtung nicht eingeschaltet sein dürfen, bevor der Benutzerschalter aktiviert ist.

2. Ladeeinrichtung nach einem der vorangehenden Ansprüche, wobei der Benutzerschalter eingerichtet ist, auch das Laden einzuschalten.

3. Ladeeinrichtung nach einem der vorangehenden Ansprüche, wobei die Ladeeinrichtung eingerichtet ist, Laden zu starten, wenn der Benutzerschalter aktiviert ist, die Ladeeinrichtung in eine Steckdose gesteckt ist und mit der Batterie der elektrischen Einrichtung verbunden ist.

4. Ladeeinrichtung nach einem der vorangehenden Ansprüche, wobei die Steuerungseinheit eingerichtet ist, den Schalter nach Empfangen der Aktivierung des Benutzerschalters zu verbinden.

5. Ladeeinrichtung nach einem der vorangehenden Ansprüche, wobei die Ladeleistung auf einem Ladestrom basiert; oder wobei die Ladeleistung auf einer Ladespannung basiert.

6. Ladeeinrichtung nach Anspruch 1, wobei die Steuerungseinheit eingerichtet ist, die Nachtlichtbeleuchtung (210) einzuschalten, wenn das Laden getrennt ist; oder
wobei die Steuerungseinheit eingerichtet ist, die Nachtlichtbeleuchtung auszuschalten, wenn das Laden verbunden ist.

7. Einrichtung nach einem der vorangehenden Ansprüche, wobei die Beleuchtungseinrichtung ferner ein Ladelicht aufweist, wobei die Steuerungseinheit eingerichtet ist, das Ladelicht (211) einzuschalten, wenn das Laden ein ist.

8. Ladeeinrichtung nach Anspruch 7, wobei die Steuerungseinheit eingerichtet ist, das Ladelicht auszuschalten, wenn das Laden aus ist.

9. Verfahren, umfassend:
Detektieren, durch einen Detektor (103), einer Ladeleistung einer Batterie einer elektrischen Einrichtung, enthaltend einen ersten und einen zweiten Wert der Ladeleistung, wobei der erste Wert einen aktuellen Wert der Ladeleistung enthält und der zweite Wert einen vorherigen Wert der Ladeleistung enthält;
Verbinden und Trennen, durch einen Schalter (105), des Ladens;
Steuern, durch eine Steuerungseinheit (106), des Schalters zum Trennen des Ladens, wenn eine Beziehung zwischen dem ersten und dem zweiten Wert der Ladeleistung einen Schwellenwert für einen bestimmten Zeitraum überschreitet;
Beleuchten, durch eine Beleuchtungseinrichtung (107), umfassend eine Nachtlichtbeleuchtung (210) und eine Ladebeleuchtung (211), der Umgebung einer Ladeeinrichtung bei dunklen oder halbdunklen Verhältnissen, wobei die Steuerungseinheit ferner das Nachtlicht zum Beleuchten der Ladeeinrichtung auf Grundlage der Beziehung steuert, wobei die Steuerungseinheit ferner eingerichtet ist, die Ladebeleuchtung auf Grundlage der Beziehung zu steuern; und
Ein- und Ausschalten, durch einen Benutzerschalter (105, 108), der Nachtlichtbeleuchtung und der Ladebeleuchtung auf Grundlage einer Aktivierung durch einen Benutzer der Ladeeinrichtung, so dass die Nachtlichtbeleuchtung und die Ladebeleuchtung nicht ein sein dürfen, bevor der Benutzerschalter aktiviert ist.

## Revendications

1. Dispositif chargeur (100), comprenant:
un détecteur (103) configuré pour détecter une puissance de charge d'une batterie d'un appareil électrique comprenant une première et une seconde valeurs de la puissance de charge, dans lequel la première valeur comprend une valeur de courant de la puissance de charge et la seconde valeur comprend une précédente valeur de la puissance de charge;
un commutateur (105) configuré pour connecter et déconnecter la charge;
une commande (106) configurée pour commander le commutateur pour déconnecter la charge lorsqu'une relation entre la première et la seconde valeur de la puissance de charge dépasse un seuil pendant une période de temps;
un dispositif d'éclairage (107) comprenant une veilleuse (210) et un témoin de charge (211), dans lequel la veilleuse est configurée pour éclairer l'environnement du chargeur dans des circonstances sombres ou crépusculaires, dans lequel la commande est en outre configurée pour commander la veilleuse pour éclairer le dispositif chargeur sur la base de la relation, dans lequel la commande est en outre configurée pour commander le témoin de charge sur la base de la relation ; et
un commutateur utilisateur (105, 108) configuré pour commander le dispositif d'éclairage pour allumer et éteindre la veilleuse et le témoin de charge sur la base de l'activation par un utilisateur du dispositif chargeur pour que la veilleuse et le témoin de charge puisse ne pas être allumé avant que le commutateur utilisateur ne soit activé.

2. Dispositif chargeur selon l'une quelconque des revendications précédentes, dans lequel le commutateur utilisateur est configuré pour en outre allumer la charge.

3. Dispositif chargeur selon l'une quelconque des revendications précédentes, dans lequel le chargeur est configuré pour démarrer la charge lorsque le commutateur utilisateur est activé, le dispositif chargeur est branché dans une prise et connecté à la batterie de l'appareil électrique.

4. Dispositif chargeur selon l'une quelconque des revendications précédentes, dans lequel la commande est configurée pour connecter le commutateur après avoir reçu l'activation du commutateur utilisateur.

5. Dispositif chargeur selon l'une quelconque des revendications précédentes, dans lequel la puissance de charge est basée sur un courant de charge; ou
dans lequel la puissance de charge est basée sur une tension de charge.

6. Dispositif chargeur selon la revendication 1, dans lequel la commande est configurée pour allumer la veilleuse (210) lorsque la charge est déconnectée ; ou
dans lequel la commande est configurée pour éteindre la veilleuse lorsque la charge est connectée.

7. Dispositif selon l'une quelconque des revendications précédentes, dans lequel le dispositif d'éclairage inclut en outre un voyant de charge, dans lequel la commande est configurée pour allumer le voyant de charge (211) lorsque la charge est allumée.

8. Dispositif chargeur selon la revendication 7, dans lequel la commande est configurée pour éteindre le voyant de charge lorsque la charge est éteinte.

9. Procédé, comprenant:
Détecter, par un détecteur (103) une puissance de charge d'une batterie d'un appareil électrique comprenant une première et une seconde valeurs de la puissance de charge, dans lequel la première valeur comprend une valeur de courant de la puissance de charge et la seconde valeur comprend une précédente valeur de la puissance de charge;
connecter et déconnecter, la charge par un commutateur (105);
commander, par une commande (106), le commutateur pour déconnecter la charge lorsqu'une relation entre la première et la deuxième valeur de la puissance de charge dépasse un seuil pendant une période de temps;
éclairer, par un dispositif d'éclairage (107) comprenant une veilleuse (210) et un témoin de charge (211), l'environnement du chargeur dans des circonstances sombres ou crépusculaires, dans lequel la commande en outre commande la veilleuse pour éclairer le chargeur sur la base de la relation, dans lequel la commande est en outre configurée pour commander le témoin de charge sur la base de la relation ; et
allumer ou éteindre, par un commutateur utilisateur (105, 108), la veilleuse et le témoin de charge de l'éclairage sur la base de l'activation par un utilisateur du chargeur pour que la veilleuse et le témoin de charge puisse ne pas être allumé avant que le commutateur utilisateur ne soit activé.
